Europäisches Patentamt

European Patent Office

Office européen des brevets

(19)

(11) Numéro de publication : **0 109 877 B1**

(12) **FASCICULE DE BREVET EUROPÉEN**

(45) Date de publication du fascicule du brevet :
09.07.86

(51) Int. Cl.⁴ : **G 21 C 19/30**

(21) Numéro de dépôt : **83402094.3**

(22) Date de dépôt : **27.10.83**

(54) **Dispositif de purification du métal liquide de refroidissement d'un réacteur nucléaire à neutrons rapides.**

(30) Priorité : 29.10.82 FR 8218195

(43) Date de publication de la demande :
30.05.84 Bulletin 84/22

(45) Mention de la délivrance du brevet :
09.07.86 Bulletin 86/28

(84) Etats contractants désignés :
**BE DE GB IT LU NL**

(56) Documents cités :
**EP-A- 0 082 063
FR-A- 2 080 956
FR-A- 2 246 942
FR-A- 2 395 570
FR-A- 2 412 915
FR-A- 2 521 762
NL-A- 7 101 724**
ENERGIE NUCLEAIRE, vol. 13, no. 6, novembre-décembre 1971, Paris (FR), J. CORON et al.: "Les méthodes de purification du sodium", pages 428-435
PATENTS ABSTRACTS OF JAPAN, vol. 5, no. 102, 2 juillet 1981, page 774C-61
PATENTS ABSTRACTS OF JAPAN, vol. 5, no. 16, 30 janvier 1981, page 688C-41

(73) Titulaire : **NOVATOME
20 Avenue Edouard Herriot
F-92350 Le Plessis Robinson (FR)**

(72) Inventeur : **Dumay, Jean-Jacques
16 route de Rambouillet
F-78720 Dampierre (FR)**
Inventeur : **Malaval, Claude
115bis avenue du Bois de Verrières
F-92160 Antony (FR)**

(74) Mandataire : **Bressand, Georges et al**
c/o CABINET LAVOIX 2 Place d'Estienne d'Orves
**F-75441 Paris Cedex 09 (FR)**

EP 0 109 877 B1

Jouve, 18, rue St-Denis, 75001 Paris, France

## Description

L'invention concerne un dispositif de purification du métal liquide de refroidissement d'un réacteur nucléaire à neutrons rapides.

Les réacteurs nucléaires à neutrons rapides utilisent généralement un métal liquide tel que le sodium comme fluide caloporteur. Pendant le fonctionnement du réacteur, ce sodium liquide qui circule dans la cuve au contact du cœur et des différentes parties de l'équipement interne de la cuve du réacteur se charge d'impuretés telles que des oxydes, des hydrures dissous dans le sodium ou telles que des particules solides en suspension.

Il est donc nécessaire d'épurer le métal liquide caloporteur en cours d'utilisation du réacteur.

On utilise généralement des dispositifs complexes permettant de prélever une partie du sodium liquide, de le refroidir et de le faire passer sur un filtre constitué par des fibres métalliques, par exemple en acier inoxydable. Les impuretés contenues par le métal liquide précipitent préférentiellement sur les fibres métalliques du filtre si la température du métal liquide est suffisamment basse. On opère ainsi un piégeage à froid des impuretés.

De tels dispositifs permettant le piégeage à froid des impuretés comportent une pompe de mise en circulation du métal liquide, un échangeur économiseur permettant d'assurer un transfert de chaleur entre le métal non épuré chaud et le métal épuré refroidi, un dispositif de refroidissement supplémentaire du métal liquide à épurer et une cartouche de filtration en fibres métalliques.

De tels dispositifs peuvent être immergés dans la cuve du réacteur, ces dispositifs sont alors dits intégrés, ou encore montés à l'extérieur de la cuve sur un circuit de métal liquide en dérivation et ces dispositifs sont alors dits dérivés.

De tels dispositifs ont été décrits par exemple dans les brevets français FR-A-2.246.942 et FR-A-2.395.570. Ces dispositifs ont une structure complexe dans laquelle les différents éléments les constituant sont placés les uns au-dessus des autres dans la direction axiale du dispositif. La longueur de ces ensembles est donc relativement grande et lorsqu'on les dispose verticalement à l'intérieur d'une cuve de réacteur nucléaire à neutrons rapides, leur tenue aux contraintes externes, par exemple lors d'un séisme, peut s'avérer insuffisante. Ces ensembles comportent de nombreuses tuyauteries de raccordement entre leurs différents organes.

Le dispositif décrit dans le brevet FR-A-2.246.942 comporte un ensemble de chambres délimitées par des parois cylindriques disposées verticalement. L'une des chambres renferme un échangeur économiseur, une autre est reliée à des moyens de refroidissement constitués par un serpentin et une source de fluide réfrigérant et une troisième constitue une chambre de refroidissement et de purification renfermant une cartouche filtrante. La cartouche filtrante constitue un ensemble mécanique et comporte un canal central dans lequel est récupéré le métal liquide purifié. Le métal liquide à purifier mis en circulation par une pompe passe successivement dans l'échangeur-économiseur et dans la chambre de refroidissement et de purification où il est refroidi, puis au travers de la cartouche filtrante, pour être récupéré dans le canal central de cette cartouche. Le métal purifié est alors envoyé à l'échangeur-économiseur où il assure le refroidissement du métal à purifier.

Le dispositif décrit dans le brevet FR-A-2.395.570 comporte un circuit de sodium extrêmement complexe comportant de nombreux éléments de raccordement tubulaires.

Dans le cas des deux dispositifs, le serpentin de refroidissement du sodium à épurer est d'autre part incorporé au dispositif de façon que son démontage est difficile à réaliser et qu'il se trouve contaminé par le sodium à épurer venant de la cuve contenant le cœur du réacteur.

En cas de fuite sur ce serpentin de refroidissement, son démontage est malaisé et nécessite une opération complète de décontamination.

Les dispositifs connus de l'art antérieur sont donc complexes dans leur structure ; ceci accroît les coûts de réalisation et d'entretien de ces dispositifs qui présentent d'autre part une grande longueur, de nombreuses tuyauteries de raccordement entre leurs organes et en conséquence une résistance aux sollicitations externes telles que celles dues aux séismes qui peut être insuffisante. Ces dispositifs sont également soumis à des contraintes d'origine thermique qui peuvent être importantes et qui nécessitent de prévoir des tuyauteries de liaison de forme spéciale (lyre).

Le but de l'invention est donc de proposer un dispositif de purification du métal liquide de refroidissement d'un réacteur nucléaire à neutrons rapides, par piégeage à froid des impuretés, comportant une pompe de mise en circulation du métal liquide, un ensemble de chambres limitées par des parois cylindriques disposées verticalement dont l'une renferme un échangeur économiseur, dont une autre est reliée à des moyens de refroidissement et dont une troisième constitue une chambre de refroidissement et de purification en communication par sa paroi latérale interne avec la surface latérale externe d'une cartouche filtrante, une paroi d'isolation thermique coaxiale aux chambres et un canal de recueil du métal liquide purifié dirigé suivant l'axe de la cartouche filtrante, de façon que le métal liquide à purifier passe successivement dans l'échangeur économiseur en communication à sa partie inférieure avec la pompe et dans la chambre de refroidissement dans l'échangeur économiseur en communication à sa partie inférieure avec la pompe et dans la chambre de refroidissement et de purification pour son refroidissement par le métal liquide purifié puis par les moyens de refroidissement et pour sa purification par passage au travers de la cartouche filtrante, vers le canal de recueil du métal liquide purifié, le métal liquide purifié passant alors dans l'échangeur économiseur pour le refroidissement du métal liquide à purifier, dispositif qui soit d'une structure simple et peu encombrante dans la direction axiale, qui ait une tenue améliorée aux contraintes mécaniques et thermiques et qui permette de simplifier sa conception, sa construction et son entretien.

Dans ce but, les chambres sont annulaires et coaxiales, fermées à leur partie inférieure par au moins une plaque de base horizontale assurant la tenue mécanique et la fixation de l'ensemble des chambres et placées l'une à l'intérieur de l'autre, une chambre de dégazage du métal purifié ouverte à sa partie supérieure délimitant extérieurement, par sa paroi interne un bassin de recueil du métal liquide purifié surmontant le dispositif et entourant l'ensemble des chambres qui comporte de l'extérieur vers l'intérieur :

la chambre renfermant l'échangeur économiseur communiquant avec la partie inférieure de la chambre de dégazage par sa partie recevant le métal liquide purifié et avec un conduit de sortie du métal liquide purifié,

la paroi d'isolation thermique,

la chambre reliée au moyen de refroidissement et remplie de métal liquide purifié,

la chambre de refroidissement et d'épuration en communication par sa partie supérieure avec la partie de l'échangeur économiseur où circule le métal à purifier,

et un canal de recueil du métal liquide purifié.

Afin de bien faire comprendre l'invention, on va maintenant décrire à titre d'exemples non limitatifs, plusieurs modes de réalisation de dispositifs de purification du métal liquide de refroidissement d'un réacteur nucléaire à neutrons rapides.

La figure 1 représente, dans une vue en coupe par un plan vertical de symétrie, un dispositif de purification selon l'invention, de type intégré, comportant un échangeur économiseur selon un premier mode de réalisation.

La figure 1a représente une demi-vue en coupe suivant A de la figure 1.

La figure 1b représente une vue en perspective d'une portion de la partie supérieure du dispositif de purification, au niveau d'une sortie d'un dispositif de refroidissement.

La figure 1c représente une coupe suivant C de la figure 1b.

La figure 1d représente une coupe suivant D de la figure 1b.

La figure 2 représente dans une vue en coupe par un plan vertical de symétrie un dispositif de purification suivant l'invention, de type dérivé, comportant un échangeur économiseur suivant un second mode de réalisation.

La figure 3 représente dans une vue en coupe par un plan vertical de symétrie un dispositif de purification suivant l'invention comportant un échangeur économiseur suivant un troisième mode de réalisation.

La figure 3a est une demi-vue en coupe suivant A de la figure 3.

La figure 4 est une vue en coupe par un plan vertical de symétrie d'un dispositif de purification comportant un échangeur économiseur suivant un quatrième mode de réalisation.

La figure 4a est une demi-vue en coupe suivant A de la figure 4.

La figure 5 est une vue en perspective d'un dispositif de refroidissement externe d'un dispositif de purification suivant l'invention.

La figure 6a est une vue en coupe de la partie inférieure d'un dispositif de purification montrant une première variante d'exécution de la partie inférieure des chambres et du moyen de pompage relié à l'entrée de l'échangeur économiseur.

La figure 6b est une vue en coupe par un plan vertical de symétrie de la partie inférieure d'un dispositif de purification suivant l'invention montrant une seconde variante d'exécution de la partie inférieure des chambres et du moyen de pompage relié à l'entrée de l'échangeur économiseur.

La figure 7 représente, dans une vue en coupe par un plan vertical de symétrie, un dispositif de purification comparable au dispositif représenté à la figure 1 et comportant un moyen de pompage additionnel pour le réglage du niveau de métal liquide dans le bassin de recueil du métal épuré.

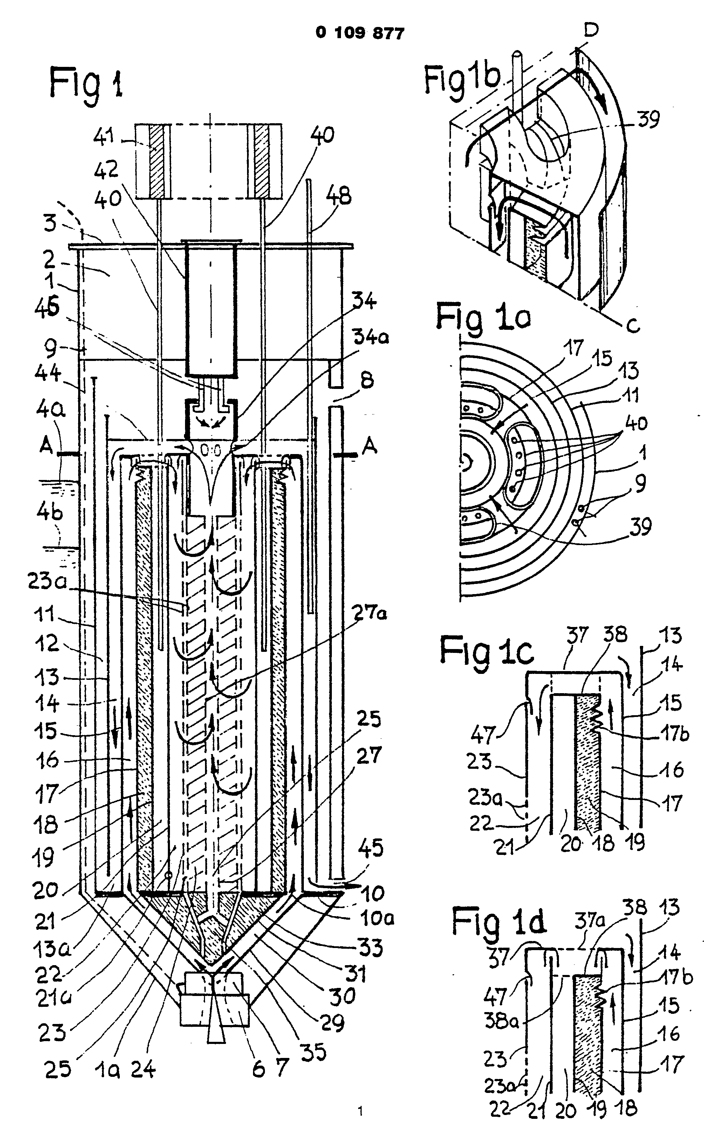

Sur les figures 1, 1a et 1b, on voit un dispositif de purification de type intégré comportant une enveloppe externe 1 reliée à sa partie supérieure à un bouchon 2 dont le flasque supérieur 3 vient reposer sur la dalle fermant la cuve du réacteur lorsque le dispositif est introduit dans la cuve par un trou traversant la dalle dont l'épaisseur correspond sensiblement à l'épaisseur du bouchon 2. La partie inférieure de l'enveloppe 1 renfermant le dispositif de purification proprement dit pénètre alors sous le niveau 4 du sodium liquide remplissant la cuve. En réalité, le niveau 4 peut se déplacer entre le niveau maximum 4a et le niveau minimum 4b. L'enveloppe 1 comporte une partie inférieure tronconique 1a entourant la partie inférieure du dispositif de purification. Cette partie du dispositif de purification comporte une pompe-débitmètre 6-7 assurant le pompage du sodium à épurer dans la cuve du réacteur et le contrôle du débit de sodium pompé dans la cuve. Un tel ensemble pompe-débitmètre pour métal liquide, sans tuyauterie de raccord, fabriqué par la Société NOVATOME, permet de simplifier la réalisation de la partie inférieure du dispositif de purification.

L'enveloppe 1 est remplie de gaz inerte, par exemple de l'argon et communique avec l'argon de couverture de la cuve par une ouverture 8 en partie supérieure. Dans l'enveloppe 1 remplie d'argon passent les câbles 9 d'alimentation et de recueil du signal de la pompe-débitmètre 6-7.

Le dispositif de purification proprement dit disposé à l'intérieur de l'enveloppe 1 comporte une plaque de base 10 sur laquelle sont fixées les différentes viroles constituant les enveloppes des chambres annulaires coaxiales du dispositif de purification. La plaque de base 10 est fixée sur l'enveloppe 1 à sa périphérie au niveau de la jonction de la partie tronconique 1a.

Les viroles successives constituent à la fois la paroi externe d'une chambre et la paroi interne de la chambre adjacente. Toutes ces viroles sont coaxiales et disposées verticalement. Les deux premières viroles 11 et 13 délimitent une première chambre annulaire 12 qui est en communication par l'intermédiaire de découpes 13a dans la virole 13, au-dessus de la plaque de base 10, avec la chambre suivante 14 délimitée par les viroles 13 et 15.

La chambre annulaire suivante 16 délimitée par les viroles 15 et 17 est en communication par des trous 10a ménagés dans la plaque 10 avec le dispositif d'alimentation en métal liquide à épurer qui sera décrit ultérieurement.

La première chambre annulaire 12 est ouverte à sa partie supérieure et débouche dans l'atmosphère d'argon remplissant l'enveloppe 1.

Les viroles 17 et 19 ménagent un espace annulaire 18 rempli par un matériau réfractaire permettant l'isolation thermique de la partie périphérique externe du dispositif de purification de la partie interne.

La première chambre annulaire 20 de la partie interne du dispositif de purification est délimitée par les viroles 19 et 21 alors que la chambre suivante 22 est délimitée par la virole 21 et par une virole 23 comportant un ensemble d'ouvertures 23a sur sa surface latérale. Ces ouvertures 23a permettent de mettre en communication la chambre 22, par l'intermédiaire de sa surface latérale interne 23, avec la surface latérale externe 25 également percée d'ouvertures, d'une cartouche filtrante 24 en fibres d'acier inoxydable.

La cartouche filtrante 24 est limitée à sa partie interne par une virole 27 percée d'ouvertures 27a et délimitant un canal 25 à la partie centrale du dispositif de purification, suivant l'axe vertical de celui-ci.

Les moyens d'alimentation en métal liquide à épurer du dispositif de purification comportent, en dehors de la pompe-débitmètre 6-7, une chambre d'alimentation 30 délimitée par des viroles tronconiques 29 et 31 et communiquant avec les trous 10a de la plaque de base 10.

A l'intérieur de la virole 31 est disposée une pièce calorifuge 33 comportant à sa partie intérieure un bouchon 35 et percée d'ouvertures permettant la vidange du métal liquide remplissant le dispositif de purification, lorsqu'on soulève la cartouche filtrante 24.

La virole 27 limitant le canal central 25 est reliée à sa partie supérieure à une virole 34 comportant des ouvertures 34a et solidaire de la cartouche filtrante 24.

La virole 13 a son bord supérieur libre et constitue l'enveloppe externe d'un bassin de recueil du métal liquide épuré dans lequel débouchent les ouvertures 34a.

En se reportant aux figures 1 et 1a à 1d, on va maintenant décrire la partie supérieure du dispositif de purification montrant la façon dont sont reliées les différentes viroles constituant les chambres successives. Ces différentes viroles sont toutes disposées à l'intérieur de la virole 13 constituant l'enveloppe externe du bassin de recueil du fluide épuré.

Les viroles 15, 17, 21 et 23 délimitant respectivement les chambres 16 et 22 sont fixées à leur partie supérieure à une plaque horizontale annulaire 37 cependant que les viroles 17, 19 et 21 sont reliées à une plaque annulaire horizontale 38 à un niveau inférieur au niveau de la plaque 37.

La plaque 37 est percée d'ouvertures 37a en forme de haricot dont la section est visible sur la figure 1a. Au niveau de ces ouvertures 37a, la plaque 38 est percée d'ouvertures 38a dont la section correspond à la section des ouvertures 37a coupées par le bord de la virole 19. Quatre cheminées 39 sont disposées au niveau de ces ouvertures et fixées aux viroles 17 et 21 et aux plaques 37 et 38. Ces cheminées 39 permettent d'avoir accès depuis le dessus à la chambre annulaire 20 dans laquelle plongent des caloducs 40 reliés à leur partie supérieure à un échangeur de chaleur externe 41.

Entre les cheminées 39, les plaques horizontales 37 et 38 délimitent un passage pour le métal liquide de la chambre annulaire 16 à la chambre annulaire 22.

A sa partie centrale le bouchon du dispositif de purification supporte le bouchon 42 de levage de la cartouche filtrante. Ce bouchon porte des pinces 46 à sa partie inférieure qui peuvent s'engager dans la partie intérieure de la virole 34 pour le levage de la cartouche filtrante et son démontage.

La virole 17 comporte une partie supérieure 17b constituant un soufflet permettant la dilatation longitudinale de cette virole.

Nous allons maintenant décrire le fonctionnement du dispositif de purification représenté à la figure 1 et aux figures 1a à 1d.

Le sodium liquide est aspiré dans la cuve par la pompe 6 dont le débit est mesuré par le débitmètre 7 de l'ensemble pompe-débitmètre et ce sodium liquide à épurer pénètre dans la chambre d'admission 30 entre les viroles tronconiques. Ce sodium à épurer pénètre ensuite dans la chambre annulaire 16 par les trous 10a de la plaque de base 10. Le sodium à épurer chaud parcourt la chambre 16 de bas en haut jusqu'à sa partie supérieure où il s'écoule à l'intérieur de la chambre annulaire de refroidissement et de purification 22.

La chambre annulaire 20 est remplie par du sodium liquide épuré à l'intérieur duquel plongent les caloducs 40. Le sodium à épurer pénétrant dans la chambre 22 par son extrémité supérieure entre donc en contact thermique par l'intermédiaire de la virole 21 avec le sodium refroidi par les caloducs 40. Ce sodium refroidi traverse alors les ouvertures 23a ménagées dans la surface latérale de la virole 23 et la cartouche filtrante 24 au contact des fibres métalliques de laquelle les impuretés se solidifient et se séparent du sodium liquide qui arrive épuré dans le canal de recueil 25 en communication par sa partie supérieure avec la virole 34, elle-même en communication par les ouvertures 34a avec le bassin de recueil 44 du sodium liquide épuré. Ce bassin de sodium liquide épuré 44 est en communication à sa périphérie avec la chambre annulaire 14 dans laquelle le sodium épuré se déplace de haut en bas en contact avec la surface externe de la virole 15 dont la surface interne est en contact avec le métal liquide à épurer chaud parcourant la chambre annulaire 16 de bas en haut. Les chambres adjacentes 14 et 16 constituent dans ce mode de réalisation l'échangeur économiseur permettant le réchauffage du sodium épuré et le refroidissement du sodium à épurer avant son entrée dans la chambre 22 ou un refroidissement supplémentaire du sodium liquide se produit au contact de la virole 21 refroidie par le sodium épuré remplissant la chambre 20.

La partie inférieure de la chambre 14 est mise en communication par les ouvertures 13a de la virole 13 avec la chambre de dégazage 12, si bien que les bulles de gaz éventuellement présentes dans le sodium épuré remontent dans la chambre 12 et s'éliminent dans la couverture gazeuse remplissant l'enveloppe 1.

La partie inférieure des viroles 13, 11 et de l'enveloppe 1 comportent également des ouvertures ménageant au moins un conduit 45 de sortie du métal épuré pour son recyclage dans la cuve du réacteur.

On a figuré par des flèches le sens de circulation du sodium à l'intérieur de tout le dispositif de purification.

La virole interne 21 de la chambre de refroidissement 20 comporte à sa partie inférieure une ouverture 21a de très petite dimension permettant la vidange du sodium épuré remplissant la chambre annulaire de refroidissement 20, par exemple pour l'entretien du dispositif de purification ou lors de son démontage.

Cette ouverture de vidange 21a de très petite dimension ne permet pas une circulation de sodium épuré du bassin 44 vers la chambre 22, avec un débit notable. Le sodium épuré remplissant la chambre de refroidissement est donc pratiquement statique.

Ainsi qu'il est visible sur la figure 1d, les jonctions entre les plaques 37 et 38, les viroles 17 et 21 et les cheminées 39 ne sont pas parfaitement étanches et permettent un certain déplacement relatif des viroles et des plaques. Cependant, cette étanchéité est suffisante pour empêcher l'introduction de sodium non épuré à l'intérieur de la chambre de refroidissement 20. Cette chambre contient donc en permanence un sodium statique ne renfermant pas d'impuretés.

Une sonde 48 plongeant dans le bassin de recueil 44 et dans la chambre 14 permet de contrôler le niveau du métal épuré dans le bassin 44. Les indications de cette sonde de niveau sont utilisées pour réguler le débit de la pompe 6 mesuré par le débitmètre 7.

Les caloducs 40 sont reliés à leur partie supérieure à un échangeur de chaleur 41 disposé au-dessus de la dalle. Cet échangeur est du type à refroidissement par air ou par eau.

La partie du dispositif de purification disposée à l'intérieur de la paroi d'isolation thermique 18 ne reçoit que du sodium refroidi puisque le sodium à épurer pénétrant à la partie supérieure de la chambre de purification 22 a circulé suivant toute la hauteur de la chambre 16 en contact avec le sodium épuré refroidi circulant de haut en bas dans la chambre de sortie 14, les chambres annulaires adjacentes 14 et 16 constituant l'échangeur économiseur du dispositif de purification.

De même la chambre 20 contient du sodium refroidi à une température encore inférieure par les caloducs 40.

Au contraire, la partie du dispositif de purification disposée à l'extérieur de la paroi d'isolation thermique 18 reçoit du sodium chaud qui circule par exemple dans la chambre 16 en provenance de la cuve et dans le bas de la chambre de sortie 14 de la chambre de dégazage 12, le sodium épuré s'étant réchauffé dans l'échangeur économiseur au contact du sodium chaud circulant dans la chambre 16. Le sodium épuré ressort par le conduit 45 à une température voisine du sodium venant de la cuve et entrant dans la chambre d'admission 30.

La structure représentée sur la figure 1 permet une libre dilatation de toutes les viroles qui sont fixées sur la plaque de base 10 par une de leurs extrémités. Il en est ainsi des viroles coniques limitant la chambre d'admission 30 et des viroles cylindriques limitant les différentes chambres annulaires du dispositif de purification.

On voit en effet sur la figure 1b que les plaques 37 et 38 disposées à la partie supérieure des viroles cylindriques sont montées sur celles-ci par l'intermédiaire d'une liaison permettant des déplacements axiaux sous l'effet de la dilatation. La virole externe 17 de la paroi d'isolation thermique 18 en contact avec le sodium chaud de la chambre 16 comporte à sa partie supérieure un soufflet 17b qui permet d'absorber les déplacements relatifs dans la direction axiale de la plaque 38 et de la virole 17. C'est le seul soufflet de dilatation qui soit nécessaire dans l'ensemble du dispositif de purification.

La plaque 37 reliée de façon rigide à la virole 15 comporte une collerette de fermeture 47 visible sur les figures 1c et 1d permettant de la raccorder à la virole 23 avec une étanchéité suffisante, tout en permettant les déplacements axiaux relatifs de cette virole et de la plaque 37.

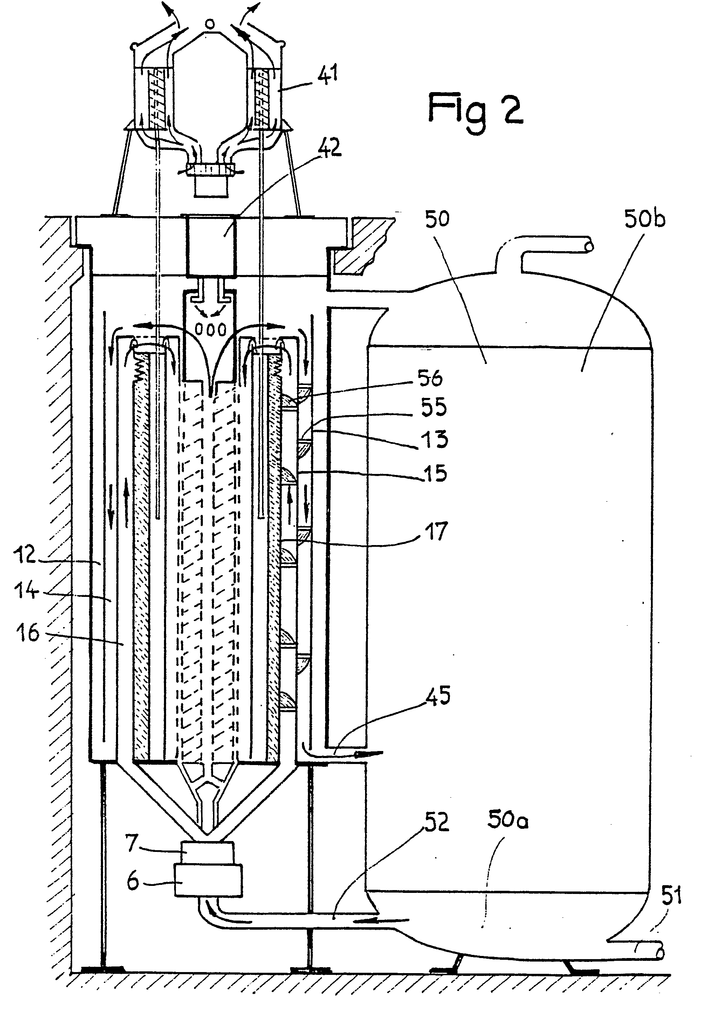

Sur la figure 2, on voit un dispositif de purification pratiquement identique au dispositif représenté à la figure 1 et placé en dérivation sur un réservoir 50 recevant à sa partie inférieure 50a du sodium à épurer par une conduite 51 et recevant en retour le sodium épuré dans sa partie 50b.

On ne refera pas une description complète du dispositif de purification dont les éléments identiques à ceux déjà décrits en se référant à la figure 1 portent les mêmes repères.

A la différence du dispositif décrit en se référant à la figure 1, le dispositif de la figure 2 ne comporte pas d'enveloppe externe 1 et reçoit le sodium à épurer par une conduite 52 branchée sur la pompe 6. Le conduit 45 fait retour à la partie 50b du réservoir 50.

L'échangeur économiseur constitué par les chambres 14 et 16 comporte d'autre part des déflecteurs 55 et 56 disposés en hélice sur les viroles 15 et 17 respectivement, à l'intérieur des chambres 14 et 16 respectivement.

Ces hélices servent de raidisseurs pour les viroles de l'échangeur économiseur et obligent le sodium chaud et le sodium froid à emprunter un parcours hélicoïdal à l'intérieur de l'échangeur économiseur, en supprimant les circulations parasites de sodium liquide contrariant les échanges thermiques.

En effet, il est nécessaire d'avoir des espaces annulaires 14 et 16 de très faible épaisseur, de l'ordre du centimètre, pour favoriser les échanges thermiques. De même, la virole intermédiaire 15 de l'échangeur économiseur doit avoir une épaisseur faible de l'ordre de 2 mm. Les calculs thermiques montrent d'autre part que dans le cas de réacteurs nucléaires à neutrons rapides, les espaces annulaires peuvent avoir une très grande hauteur, de l'ordre de 4 à 5 mètres. Il est donc nécessaire d'utiliser des raidisseurs des viroles constituant l'échangeur économiseur et d'éviter les circulations parasites du sodium liquide par thermo-siphons, défavorables aux échanges thermiques.

Dans le cas du mode de réalisation représenté à la figure 1 on divise les espaces annulaires 14 et 16 de l'échangeur économiseur en canaux verticaux par des tôles servant à la fois de déflecteurs et de raidisseurs.

Dans le mode de réalisation décrit à la figure 2, on améliore encore la circulation du sodium en disposant des déflecteurs 55 et 56 en hélice à l'intérieur des deux espaces annulaires de l'échangeur économiseur. Cette amélioration se fait au prix d'une légère complication de la construction du dispositif de purification.

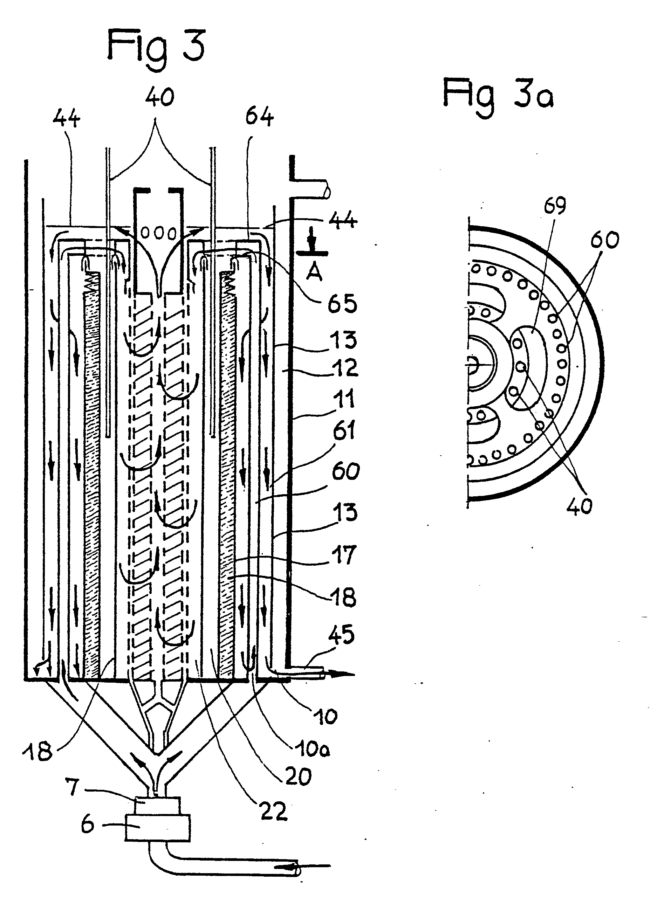

Sur les figures 3 et 3a on voit un dispositif de purification tout-à-fait comparable au dispositif représenté à la figure 1 en ce qui concerne sa partie disposée à l'intérieur de la paroi d'isolation thermique 18 recevant le sodium froid mais dont l'échangeur économiseur est réalisé d'une manière différente. Cet échangeur économiseur comporte un ensemble de tubes 60 fixés à leur partie inférieure sur la plaque de base 10 au niveau des orifices 10a, la plaque 10 servant de plaque inférieure à l'échangeur économiseur. Ils débouchent à leur partie supérieure dans un espace limité par deux plaques horizontales 64 et 65 permettant de collecter le sodium à épurer et de le diriger vers la chambre de refroidissement et de purification 22.

Les tôles 64 et 65 sont percées suivant des ouvertures permettant de faire pénétrer les caloducs 40 dans la chambre de refroidissement 20 par des cheminées 69 passant par les ouvertures des plaques 64 et 65.

Les tubes 60 baignent, à l'intérieur d'une chambre 61 limitée par les viroles 13 et 17, dans le sodium épuré refroidi s'écoulant depuis le bassin de recueil 44 dans la chambre annulaire 61. Le dégazage du sodium liquide épuré et sa sortie du dispositif de purification se fait de façon identique à ce qu'il en était pour le dispositif représenté à la figure 1, la chambre annulaire 61 étant reliée à sa partie inférieure à la chambre de dégazage 12 et au conduit de sortie 45 du sodium épuré.

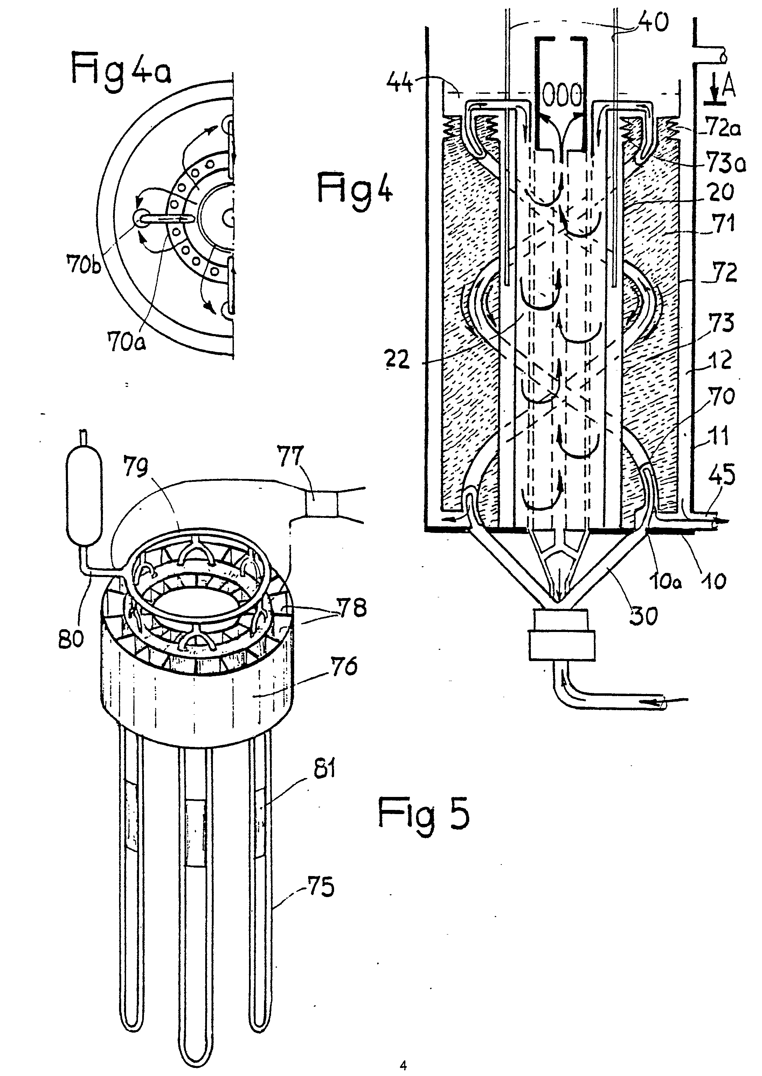

Sur les figures 4 et 4a on voit un dispositif de purification dont la partie interne recevant le sodium refroidi est identique à la partie correspondante du dispositif représenté à la figure 1 et dont l'échangeur économiseur présente une forme différente. Cet échangeur économiseur est constitué par un ensemble de doubles tubes coaxiaux 70 disposés suivant un parcours hélicoïdal à l'intérieur d'une paroi d'isolation thermique de grande épaisseur 71. Cette paroi d'isolation thermique 71 est limitée par des viroles 72 et 73 comportant des soufflets 72a et 73a à leur partie supérieure.

Le tube interne de chacun des doubles tubes coaxiaux est en communication à sa partie inférieure, par l'intermédiaire des orifices 10a de la plaque de base 10, avec l'espace 30 d'arrivée du sodium liquide chaud à épurer. Le tube coaxial externe est en communication, à sa partie inférieure, avec la partie inférieure de la chambre de dégazage 12 et avec le conduit d'évacuation du sodium épuré 45.

Ainsi qu'il est visible aux figures 4 et 4a, la partie supérieure du tube coaxial interne est en communication avec la chambre de refroidissement et de purification 22 à sa partie supérieure. La partie supérieure du tube coaxial externe est en communication avec le bassin 44 de recueil du sodium liquide épuré. De cette façon, le sodium liquide chaud à épurer circule de bas en haut suivant un parcours hélicoïdal dans les tubes internes 70a et de haut en bas suivant un parcours hélicoïdal dans les tubes externes 70b. Comme dans les modes de réalisation décrits précédemment, les échanges thermiques se font à contre-courant.

Sur la figure 5, on voit un dispositif de refroidissement externe pouvant remplacer les caloducs 40 et le dispositif 41 décrit en se référant à la figure 1. Un tel dispositif de refroidissement comporte des tubes 75 en épingle dont la partie inférieure peut être introduite dans la chambre de refroidissement 20 d'un dispositif de purification tel que représenté aux figures 1, 2 et 3.

Ces tubes sont introduits dans la chambre 20 par les cheminées 39. Ils passent à leur partie supérieure dans un échangeur 76 du type sodium-air, l'air de refroidissement étant insufflé par un ventilateur 77 à l'intérieur de canaux de refroidissement 78. La boucle supérieure des épingles 75 est reliée à une conduite torique 79 elle-même mise en communication avec un vase d'expansion 80. Un garnissage 81 permet de venir placer les tubes 75 à l'intérieur d'une ouverture prévue dans le bouchon du dispositif de purification. Le sodium circule par thermo-siphon à l'intérieur des tubes 75 en abandonnant ses calories dans l'échangeur 76.

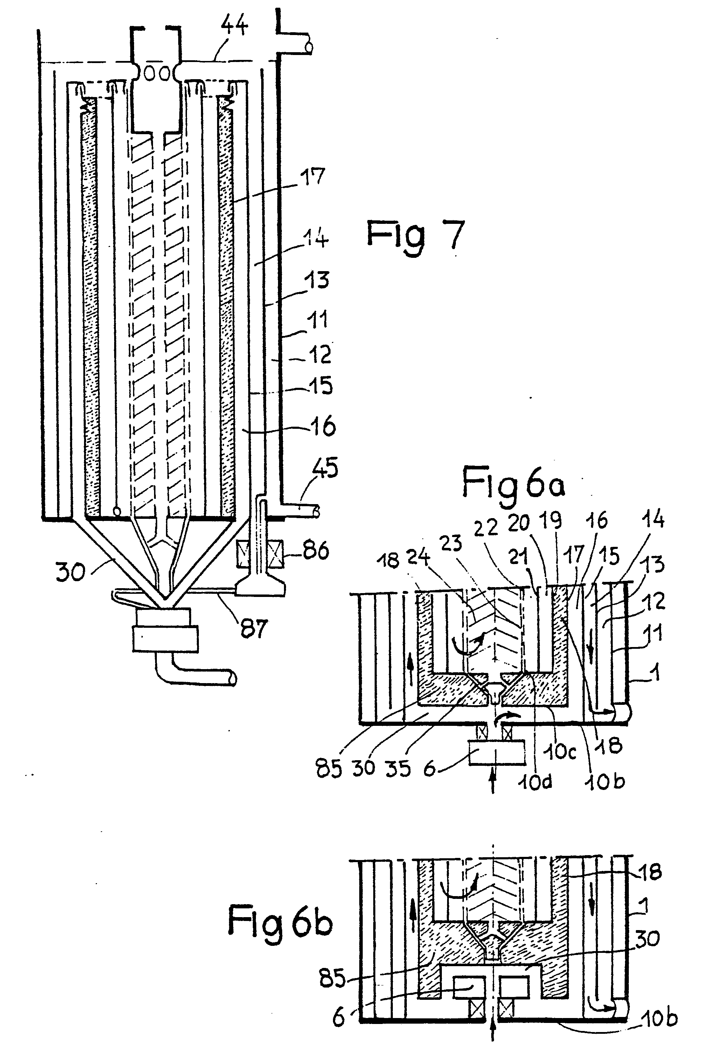

Sur la figure 6a on voit une variante de réalisation de la partie inférieure des chambres annulaires du dispositif de purification tel que représenté par exemple à la figure 1.

Dans cette variante d'exécution, les viroles coaxiales successives sont reliées à une plaque de base 10b pour l'enveloppe 1 et les viroles 11, 13 et 15, à une plaque de base 10c pour la virole 17 et à une plaque de base 10d pour les viroles 19, 21 et 23. La chambre d'alimentation 30 est limitée par les plaques 10b et 10c et une pièce d'isolation thermique épaisse 85 est disposée entre les plaques de base 10c et 10d, à la partie inférieure de la paroi d'isolation 18. La pompe électromagnétique 6 est donc disposée immédiatement en-dessous de la plaque de base 10b. A l'intérieur de la pièce massive d'isolation 85 est disposé le bouchon 35 en-dessous de la cartouche filtrante 24. La pièce massive d'isolation 85 sépare thermiquement, de façon complète, la partie du dispositif renfermant du sodium chaud de la partie du dispositif renfermant du sodium refroidi.

Sur la figure 6b, on voit une seconde variante de réalisation de la partie inférieure du dispositif de purification où la pompe électromagnétique 6 et la chambre d'admission 30 du sodium chaud à épurer ont été disposées à l'intérieur de la pièce d'isolation thermique 85 de grande épaisseur au-dessus de la plaque 10b. Cette disposition est particulièrement intéressante car l'ensemble du dispositif se trouve à l'intérieur de l'enceinte délimitée par l'enveloppe 1 et par la plaque 10b.

Les dispositions représentées aux figures 6a et 6b ont l'avantage d'assurer la fermeture de toutes les chambres renfermant du sodium chaud par une même plaque de base et la fermeture de toutes les parties inférieures des chambres renfermant du sodium froid par une autre plaque de base.

On évite ainsi des dilatations différentielles entraînant des déformations de la plaque de base.

Le dispositif de purification représenté à la figure 7 est en tout point identique au dispositif de purification représenté à la figure 1 mais il comporte en outre une pompe électromagnétique de réglage 86 intercalée entre les chambres annulaires 12 et 14 et branchée à leur partie inférieure.

Une telle pompe de réglage refoulant le sodium liquide de la chambre annulaire 12 vers la chambre annulaire 14 permet de faire monter le niveau libre dans le bassin de recueil du sodium épuré jusqu'au moment où ce niveau dépasse le niveau supérieur de la virole 13. Le sodium liquide épuré se déverse alors directement dans la chambre annulaire 12 où s'effectue son dégazage puis sa sortie par le conduit 45 sans passage dans l'échangeur économiseur constitué par les chambres annulaires 14 et 16. On évite ainsi de refroidir le métal chaud ce qui peut être intéressant dans le cas d'une purification intégrée dans un réacteur nucléaire pendant la manutention du combustible ou des composants de ce réacteur. En effet, pendant ces manutentions, le sodium de la cuve est à une température assez basse (180 °C).

La pompe de réglage 86 est reliée à la chambre d'admission 30 par un tuyau de petit diamètre 87 permettant la vidange.

On voit que les principaux avantages du dispositif selon l'invention sont qu'il peut être réalisé d'une manière pratiquement identique qu'il soit du type intégré ou dérivé, que sa structure est particulièrement simple et qu'en particulier la cartouche ne comporte aucune partie mécanique ni aucune tuyauterie interne. Cette cartouche peut donc être facilement démontée et jetée si cela est nécessaire. L'ensemble du module est disposé sur une plaque de base servant de support au module et permettant la fixation des viroles qui sont ainsi libres de se dilater d'un côté de la plaque de base. Ceci conduit à de faibles contraintes thermiques.

D'autre part, la structure annulaire permet d'avoir un dispositif qui soit plus court que les dispositifs de l'art antérieur et qui résiste mieux aux séismes. Cette structure est particulièrement compacte et sa section est identique sur la quasi-totalité de sa longueur.

Le refroidissement étant assuré par des caloducs ou par des tubes d'échange de chaleur en épingles plongeant dans une chambre de refroidissement facilement démontables, l'entretien et la réparation de cette partie du dispositif sont particulièrement faciles et ne nécessitent pas d'opération complexe de décontamination.

Enfin, un tel dispositif de purification est d'une structure simple ne comportant pas de tuyauterie de liaison interne, le métal liquide se déplaçant uniquement à l'intérieur de chambres annulaires en communication les unes avec les autres, à l'une de leurs extrémités.

L'invention ne se limite pas aux modes de réalisation qui viennent d'être décrits ; c'est ainsi qu'on peut imaginer d'autres modes de réalisation de l'échangeur économiseur et du dispositif de refroidissement externe.

On peut également imaginer l'utilisation d'autres types de dispositifs filtrants à la partie centrale du dispositif de purification. On peut par exemple imaginer l'utilisation de tôles perforées ou de grillage ou d'une alternance de tôles perforées et de tissus filtrants métalliques.

Le dispositif suivant l'invention peut être utilisé pour la purification de tout métal liquide de refroidissement d'un réacteur nucléaire à neutrons rapides. Ce dispositif peut être utilisé comme dispositif intégré ou comme dispositif en dérivation.

## Revendications

1. Dispositif de purification de métal liquide de refroidissement d'un réacteur nucléaire à neutrons rapides par piégeage à froid des impuretés comportant une pompe (6) de mise en circulation du métal liquide, un ensemble de chambres limitées par des parois cylindriques disposées verticalement dont l'une (14, 16) renferme un échangeur économiseur, dont une autre (20) est reliée à des moyens de refroidissement (40) et dont une troisième (22) constitue une chambre de refroidissement et de purification en communication par sa paroi latérale interne avec la surface latérale externe d'une cartouche filtrante (24), une paroi d'isolation thermique (18) coaxiale aux chambres (14, 16, 20, 22) et un canal (25) de recueil du métal liquide purifié dirigé suivant l'axe de la cartouche filtrante (24), de façon que le métal liquide à purifier passe successivement dans l'échangeur économiseur en communication à sa partie inférieure avec la pompe (6) et dans la chambre de refroidissement et de purification (22) pour son refroidissement par le métal liquide purifié puis par les moyens de refroidissement (40) et pour sa purification par passage au travers de la cartouche filtrante (24), vers le canal (25) de recueil du métal liquide purifié, le métal liquide purifié passant alors dans l'échangeur économiseur pour le refroidissement du métal liquide à purifier, caractérisé par le fait que les chambres (14, 16, 20, 22) sont annulaires et coaxiales, fermées à leur partie inférieure par au moins une plaque de base horizontale (10) assurant la tenue mécanique et la fixation de l'ensemble des chambres et placées l'une à l'intérieur de l'autre, une chambre (12) de dégazage du métal purifié ouverte à sa partie supérieure délimitant extérieurement, par sa paroi interne (13), un bassin (44) de recueil du métal liquide purifié surmontant le dispositif et entourant l'ensemble des chambres qui comporte de l'extérieur vers l'intérieur :

la chambre (14, 16) renfermant l'échangeur économiseur communiquant avec la partie inférieure de la chambre de dégazage (12) par sa partie recevant le métal liquide purifié et avec un conduit (45) de sortie du métal liquide purifié,

la paroi d'isolation thermique (18),

la chambre (20) reliée au moyen de refroidissement (40) et remplie de métal liquide purifié,

la chambre de refroidissement et d'épuration (22) en communication par sa partie supérieure avec la partie de l'échangeur économiseur où circule le métal liquide à purifier,

et un canal (25) de recueil du métal liquide purifié.

2. Dispositif de purification suivant la revendication 1, caractérisé par le fait que l'échangeur-économiseur est constitué par deux chambres annulaires coaxiales adjacentes (14, 16) séparées par une virole métallique (15) au travers de laquelle s'effectuent les échanges thermiques, la chambre externe (14) étant une chambre de réchauffage et de sortie du métal liquide purifié communiquant par sa partie inférieure avec la partie inférieure de la chambre de dégazage (12) et avec un conduit de sortie (45) du métal liquide purifié et par sa partie supérieure avec le bassin de recueil du métal liquide purifié (44), la chambre interne (16) étant une chambre d'arrivée et de refroidissement du métal liquide à épurer, en communication par sa partie inférieure avec la sortie de la pompe de circulation du métal liquide à épurer (6) et par sa partie supérieure avec la chambre de refroidissement et d'épuration (22) du métal liquide.

3. Dispositif de purification suivant la revendication 1, caractérisé par le fait que l'échangeur économiseur est constitué par des tubes (60) disposés suivant la direction axiale, à l'intérieur d'une chambre annulaire (61) comprise entre l'enveloppe cylindrique interne (13) de la chambre de dégazage (12) et la paroi d'isolation thermique (18) reliée à sa partie supérieure au bassin de recueil du métal liquide épuré (44) et à sa partie inférieure à la chambre de dégazage (12) et au conduit de sortie du métal liquide purifié (45), à l'intérieur de laquelle circule le métal liquide épuré et refroidi, les tubes (60) étant reliés à l'une de leurs extrémités à la sortie de la pompe de circulation du métal liquide (6) à épurer et à leur autre extrémité à la chambre annulaire (22) de refroidissement et d'épuration du métal liquide.

4. Dispositif de purification suivant la revendication 1, caractérisé par le fait que l'échangeur économiseur est constitué par un ensemble de doubles tubes coaxiaux (70) disposés en hélice à l'intérieur d'une chambre (71) remplie de matériau d'isolation thermique comprise entre l'enveloppe cylindrique interne (72) de la chambre de dégazage (12) et l'enveloppe cylindrique externe (73) de la chambre de refroidissement (20), le tube interne du double tube coaxial (70) étant relié à sa partie inférieure à la sortie de la pompe de circulation de métal liquide (6) et à sa partie supérieure à la chambre annulaire de refroidissement et de purification (22), et la partie externe des doubles tubes coaxiaux (70) étant en communication à sa partie supérieure avec le bassin de recueil du métal liquide épuré (44) et à sa partie inférieure avec la chambre de dégazage (12) et avec le conduit de sortie du métal liquide épuré (45).

5. Dispositif de purification suivant la revendication 2, caractérisé par le fait que des plaques de raidissement et de déflection du métal liquide (55, 56) sont disposées verticalement à l'intérieur des deux chambres annulaires coaxiales adjacentes (14, 16) constituant l'échangeur économiseur sur toute la longueur de ces chambres pour le raidissement de la structure et le guidage du métal liquide.

6. Dispositif de purification suivant la revendication 2, caractérisé par le fait que des raidisseurs (55, 56) sont disposés à l'intérieur des chambres annulaires adjacentes (14, 16) constituant l'échangeur économiseur, suivant des hélices ayant pour axe l'axe commun des chambres annulaires, suivant toute la longueur de ces chambres et dans le sens transversal, pour le raidissement de la structure et le guidage du métal liquide suivant des parcours hélicoïdaux.

7. Dispositif de purification suivant la revendication 2, caractérisé par le fait que la chambre annulaire d'arrivée et de refroidissement du métal liquide à épurer (16), la chambre de refroidissement (20) et la chambre d'épuration du métal liquide (22) sont fermées à leur partie supérieure par un jeu de plaques horizontales (37 et 38) mettant en communication la chambre d'arrivée et de refroidissement (16) du métal liquide à épurer avec la chambre d'épuration du métal liquide (22) et isolant du métal liquide à épurer la chambre de refroidissement (20), des ouvertures (37a et 38a) étant prévues dans ces plaques (37 et 38) et des cheminées de passage (39) étant disposées au niveau de ces ouvertures (37a et 38a) pour l'introduction dans la chambre de refroidissement (20) de dispositifs de prélèvement de chaleur (40) faisant partie des moyens de refroidissement externes de cette chambre.

8. Dispositif de purification suivant l'une quelconque des revendications 1 à 7, caractérisé par le fait que les moyens de refroidissement (40) du métal liquide épuré de la chambre de refroidissement (20) sont constitués par des caloducs plongeant dans le métal liquide remplissant cette chambre reliés à l'extérieur du dispositif de purification à un échangeur de chaleur (41) du type à refroidissement par air.

9. Dispositif de purification suivant l'une quelconque des revendications 1 à 7, caractérisé par le fait que les moyens de refroidissement du fluide épuré remplissant la chambre de refroidissement sont constitués par des tubes en épingles (75) remplis de sodium liquide d'échange et plongeant par leur partie inférieure dans le métal liquide remplissant la chambre de refroidissement (20) et pénétrant par leur partie supérieure dans un disposit̄f de refroidissement par air (76).

10. Dispositif de purification suivant l'une quelconque des revendications 1 à 9, caractérisé par le fait que les différentes enveloppes cylindriques des chambres annulaires sont toutes fixées à leur partie inférieure sur une plaque de base (10) unique percée d'ouvertures (10a) pour le passage du métal liquide à épurer, une chambre d'admission (30) du métal liquide en communication avec les ouvertures (10a) de la plaque de base (10) étant disposée sous cette plaque (10) et en communication avec la sortie de la pompe de circulation du métal liquide (6).

11. Dispositif de purification suivant l'une quelconque des revendications 1 à 9, caractérisé par le fait que les enveloppes cylindriques (19, 21, 23) limitant les chambres de refroidissement (20) et d'épuration (22) sont reliées à une première plaque de base horizontale (10d) et que les enveloppes cylindriques (15, 17, 11, 13) de l'échangeur économiseur et de la chambre de dégazage (12) sont reliées à au moins une plaque de base horizontale (10b) différente de la première plaque (10d).

12. Dispositif de purification suivant la revendication 11, caractérisé par le fait que la pompe (6) est disposée au-dessus de la plaque de base (10b) supportant les enveloppes cylindriques (15, 17, 11, 13) de l'échangeur économiseur et de la chambre de dégazage (12), l'ensemble des éléments du dispositif de purification se trouvant au-dessus de cette plaque de base inférieure (10b).

13. Dispositif de purification suivant l'une quelconque des revendications 1 à 12, caractérisé par le fait qu'il est de type intégré et disposé à l'intérieur d'une enveloppe (1) remplie d'un gaz inerte.

14. Dispositif de purification suivant la revendication 2, caractérisé par le fait qu'une pompe électromagnétique de réglage (86) est disposée entre la chambre de dégazage (12) et la chambre de sortie du métal liquide épuré (14) de façon à refouler le métal liquide dans cette chambre (14) jusqu'à un niveau supérieur à l'extrémité supérieure de l'enveloppe cylindrique interne (13) de la chambre de dégazage (12).

15. Dispositif de purification suivant l'une quelconque des revendications 1 à 4 caractérisé par le fait que la pompe de mise en circulation du métal liquide est une pompe-débitmètre (6-7) permettant également la mesure du débit du métal liquide entrant dans le dispositif de purification.

**Claims**

1. A device for purifying liquid metal coolant of a fast neutron nuclear reactor, by cold trapping of the impurities, comprising a pump (6) for the circulation of the liquid metal, an assembly of chambers separated by cylindrical casings disposed vertically, one of which (14, 16) encloses an economizer exchanger another (20) is connected to cooling means (40) and a third one (22) constitutes a chamber for cooling and purifying communicating through its lateral wall with the lateral external surface of a filter cartridge (24), a thermal insulation wall (18) coaxial with the chambers (14, 16, 20, 22) and a channel (25) for collecting the purified liquid metal, directed along the axis of the filter cartridge (24) so that the liquid metal to be purified flows successively in the economizer exchanger communicating through its lower part with the pump (6) and in the chamber (22) for cooling and purifying for its cooling by the purified liquid metal then by the cooling means (40) and for its purifying by passing through the filter cartridge (24), to the channel (25) for collecting the purified liquid metal passing then in the economizer exchanger for cooling the liquid metal to be purified, characterized by the fact that the chambers (14, 16, 20, 29) are annular and coaxial, closed at their lower part by at least one horizontal base plate (10) ensuring the mechanical robustness and the fixing of the assembly of the chambers and placed the one inside the other, a chamber (12) for degassing the purified metal open in its upper part, bounding externally by its external wall (13) a basin (44) for collecting the purified metal placed at the upper part of the device and surrounding the assembly of the chambers which comprises from the exterior inwards :

the chamber (14, 16) enclosing the economizer exchanger communicating with the lower part of the degassing chamber (12) through its part receiving the purified liquid metal and with a duct (45) for discharging the purified liquid metal,

the thermal insulation wall (18),

the chamber (20) connected to the cooling means (40) and filled with purified liquid metal,

the chamber (22) for cooling and purifying in communication through its upper part with the part of the economizer exchanger where circulates the liquid metal to be purified

and a channel (25) for collecting the purified liquid metal.

2. The purifying device as claimed in claim 1, characterized by the fact that the economizer-exchanger consists of two adjacent coaxial annular chambers (14, 16) separated by a metallic shell (15) across which the heat exchanges take place, the outer chamber (14) being a chamber for reheating and discharging the purified liquid metal and communicating through its lower part with the lower part of the degassing chamber (12) and with an outlet duct (45) for the purified liquid metal and through its upper part with the basin for collecting the purified liquid metal (44), the inner chamber (16) being a chamber for the entry and the cooling of the liquid metal to be purified, communicating through its lower part with the outlet of the pump for circulating the liquid metal to be purified (6) and through its upper part with the chamber for cooling and purifying (22) the liquid metal.

3. The purifying device as claimed in claim 1, characterized by the fact that the economizer exchanger consists of tubes (60) arranged along the axial direction, inside an annular chamber (61) comprised between the internal cylindrical shell (13) of the degassing chamber (12) and the thermal insulation wall (18) joined at its upper part to the basin for collecting the purified liquid metal (44) and at its lower part to the degassing chamber (12) and to the duct for discharging the purified liquid metal (45) inside which the purified and cooled liquid metal circulates, the tubes (60) being connected at one of their ends to the outlet of the pump for circulating the liquid metal (6) to be purified and at their other end to the annular chamber (22) for cooling and purifying the liquid metal.

4. The purifying device as claimed in claim 1, characterized by the fact that the economizer exchanger consists of an assembly of double coaxial tubes (70) arranged helically inside a chamber (71) filled with thermal insulation material, comprised between the internal cylindrical shell (72) of the degassing chamber (12) and the external cylindrical shell (73) of the cooling chamber (20), the internal tube of the double coaxial tube (70) being joined at its lower part to the discharge of the pump (6) for circulating liquid metal and at its upper part to the annular chamber for cooling and purifying (22), and the outer part of the double coaxial tubes (70) communicating at its upper part with the basin for collecting the purified liquid metal (44) and at its lower part with the degassing chamber (12) and with the duct for discharging the purified liquid metal (45).

5. The purifying device as claimed in claim 2, characterized by the fact that plates for stiffening and for deflecting the liquid metal (55, 56) are arranged vertically inside the two adjacent coaxial annular chambers (14, 16) forming the economizer exchanger over the entire length of these chambers for stiffening the structure and guiding the liquid metal.

6. The purifying device as claimed in claim 2, characterized by the fact that the stiffeners (55, 56) are arranged inside the adjacent annular chambers (14, 16) forming the economizer exchanger, along helices having as their axis the common axis of the annular chambers, along the entire length of these chambers and in the transversal direction, for stiffening the structure and guiding the liquid metal along helical paths.

7. The purifying device as claimed in claim 2, characterized by the fact that the annular chamber for the entry and the cooling of the liquid metal to be purified (16), the cooling chamber (20) and the chamber for purifying the liquid metal (22) are closed at their upper part by a set of horizontal plates (37 and 38) placing the chamber for entry and cooling (16) of the liquid metal to be purified in communication with the chamber for purifying the liquid metal (22) and insulating the cooling chamber (20) from the liquid metal to be purified, openings (37a and 38a) being provided in these plates (37 and 38) and passage shafts (39) being arranged in the region of these openings (37a and 38a) for introducing into the cooling chamber (20) devices for heat withdrawal (40) forming part of the external means for cooling this chamber.

8. The purifying device as claimed in any one of claims 1 to 7, characterized by the fact that the means for cooling (40) the purified liquid metal in the cooling chamber (20) consist of heat pipes which are immersed in the liquid metal filling this chamber and are connected outside the purifying device to a heat exchanger (41) of the air-cooled type.

9. The purifying device as claimed in any one of claims 1 to 7, characterized by the fact that the means for cooling the purified fluid filling the cooling chamber consist of hairpin tubes (75) which are filled with liquid sodium for exchange and are immersed with their lower part in the liquid metal filling the cooling chamber (20) and entering with their upper part into a device for cooling by air (76).

10. The purifying device as claimed in any one of claims 1 to 7, characterized by the fact that the various cylindrical shells of the annular chambers are all fixed at their lower part on a single base plate (10) pierced with openings (10a) for the passage of the liquid metal to be purified, a chamber for entry (30) of the liquid metal communicating with the openings (10a) in the base plate (10) being arranged under this plate (10) and communicating with the outlet of the pump for circulating the liquid metal (6).

11. The purifying device as claimed in any one of claims 1 to 7, characterized by the fact that the cylindrical shells (19, 21, 23) defining the chambers for cooling (20) and for purifying (22) are joined to a first horizontal base plate (10d) and the cylindrical shells (15, 17, 11, 13) of the economizer exchanger and of the degassing chamber (12) are joined to at least one horizontal base plate (10b) which is different from the first plate (10d).

12. The purifying device as claimed in claim 11, characterized by the fact that the pump (6) is arranged above the base plate (10b) supporting the cylindrical shells (15, 17, 11, 13) of the economizer exchanger and of the degassing chamber (12), all of the components of the purifying device being above this lower base plate (10b).

13. The purifying device as claimed in any one of claims 1 to 7, which device is of the integrated type and is arranged inside a casing (1) filled with an inert gas.

14. The purifying device as claimed in claim 2, characterized by the fact that an electromagnetic regulating pump (86) is arranged between the degassing chamber (12) and the chamber for discharge of the purified liquid metal (14) so as to propel the liquid metal in this chamber (14) up to a level above the upper end of the internal cylindrical shell (13) of the degassing chamber (12).

15. The purifying device as claimed in any one of claims 1 to 4, characterized by the fact that the pump for circulating the liquid metal is a flow-metering pump (6-7) also permitting the flowrate of the liquid metal entering the purifying device to be measured.

## Patentansprüche

1. Vorrichtung zur Reinigung von flüssigem Metall für die Kühlung eines schnellen Reaktors durch kaltes Ausscheiden von Verunreinigungen, mit einer Umwälzpumpe für das flüssige Metall, mit einer Anordnung von Kammern, die durch zylindrische senkrechte Wände begrenzt sind, von denen eine (14, 16) einen Vortauscher umschließt, von denen eine weitere (20) mit einer Kühleinrichtung (40) verbunden ist und von denen eine dritte (22) eine Kühl- und Reinigungskammer bildet, die mit ihrer seitlichen Innenwand mit der seitlichen Außenwand einer Filterpatrone (24) in Verbindung steht, mit einer zu den Kammern (14, 16, 20, 22) koaxialen Wärmeisolierwand und mit einem Sammelkanal (25) für das gereinigte flüssige Metall, der längs der Achse der Filterpatrone (24) derart ausgerichtet ist, daß das zu reinigende flüssige Metall aufeinanderfolgend strömt: in den mit seinem Unterteil mit der Pumpe (6) in Verbindung stehenden Vortauscher, in die Kühl- und Reinigungskammer (22) zu seiner Kühlung durch das gereinigte flüssige Metall, dann durch die Kühleinrichtung (40) und zu seiner Reinigung durch Durchtritt durch die Filterpatrone (24) zum Sammelkanal (25) für das gereinigte flüssige Metall, wobei das gereinigte flüssige Metall dann in den Vortauscher strömt zur Kühlung des zu reinigenden flüssigen Metalls, dadurch gekennzeichnet, daß die Kammern (14, 16, 20, 22) ringförmig und koaxial sind, an ihrem Unterteil durch wenigstens eine waagerechte Grundplatte (10) geschlossen sind, die den mechanischen Zusammenhalt und die Festlegung aller Kammern gewährleistet, und ineinander geordnet sind, wobei eine an ihrem Oberteil offene Entgasungskammer (12) für gereinigtes Metall mit ihrer Innenwand außen ein Sammelbecken (44) für gereinigtes flüssiges Metall begrenzt, das die Vorrichtung übersteigt, die Anordnung von Kammern umschließt und von außen nach innen folgendes aufweist:

die den Vortauscher einschließende Kammer (14, 16), die mit ihrem das gereinigte flüssige Metall aufnehmeden Teil mit dem Unterteil der Entgasungskammer (12) und mit dem Unterteil der Entgasungskammer (12) und mit einer Austrittsleitung (45) für flüssiges Metall in Verbindung steht,

die Wärmeisolierwand (18),

die mit der Kühleinrichtung (40) verbundene und mit gereinigtem flüssigen Metall gefüllte Kammer (20),

die Kühl- und Reinigungskammer (22), die mit ihrem Oberteil mit dem Teil des Vortauschers in Verbindung steht, in dem das zu reinigende flüssige Metall zirkuliert,

und einen Sammelkanal (25) für gereinigtes flüssiges Metall.

2. Reinigungsvorrichtung nach Anspruch 1, dadurch gekennzeichnet, daß der Vortauscher aus zwei aneinanderliegenden koaxialen ringförmigen Kammern (14, 16) besteht, die durch einen Metallmantel (15) getrennt sind, durch den hindurch der Wärmeaustausch erfolgt, wobei die äußere Kammer (14) eine Erhitzungs- und Auslaßkammer für das gereinigte flüssige Metall ist, die über ihr Unterteil mit dem Unterteil der Entgasungskammer (14) und mit einer Auslaßleitung (15) für das gereinigte flüssige Metall und über ihr Oberteil mit dem Sammelbecken (44) für gereinigtes flüssiges Metall in Verbindung steht, wobei die innere Kammer (16) eine Einlaß- und Kühlkammer für das zu reinigende Metall ist, die über ihr Unterteil mit dem Auslaß der Umwälzpumpe (6) für das zu reinigende flüssige Metall und über ihr Oberteil mit der Kühl- und Reinigungskammer (22) für das flüssige Metall in Verbindung steht.

3. Reinigungsvorrichtung nach Anspruch 1, dadurch gekennzeichnet, daß der Vortauscher durch Rohre (60) gebildet ist, die in axialer Richtung innerhalb einer ringförmigen Kammer (61) angeordnet sind, die zwischen dem inneren zylindrischen Mantel (13) der Entgasungskammer (12) und der Wärmeisolierkammer (18) angeordnet ist und die an ihrem Oberteil mit dem Sammelbecken (44) für das gereinigte flüssige Metall und an ihrem Unterteil mit der Entgasungskammer (12) und der Auslaßleitung (45) für das gereinigte flüssige Metall verbunden ist, in der das gereinigte und gekühlte flüssige Metal zirkuliert, wobei die Rohre (60) an einem ihrer Enden mit dem Auslaß der Umwälzpumpe (6) für das zu reinigende flüssige Metall und an ihrem anderen Ende mit der ringförmigen Kühl- und Reinigungskammer (22) für das flüssige Metall verbunden sind.

4. Reinigungsvorrichtung nach Anspruch 1, dadurch gekennzeichnet, daß der Vortauscher durch eine Anordnung von koaxialen doppelten Rohren (70) gebildet ist, die schraubenförmig in einer mit Wärmeisoliermaterial gefüllten (71) angeordnet sind, die zwischen dem inneren zylindrischen Mantel (72) der Entgasungskammer (12) und dem äußeren zylindrischen Mantel (43) der Kühlkammer (20) enthalten ist, wobei das innere Rohr des koaxialen doppelten Rohrs (70) an seinem Unterteil mit dem Auslaß der Umwälzpumpe (6) für das flüssige Metall und an seinem Oberteil mit der ringförmigen Kühl- und der Reinigungskammer (22) verbunden ist, und wobei der äußere Teil der koaxialen dopjelten Rohre (70) an seinem Oberteil mit dem Sammelbecken (44) für gereinigtes flüssiges Metall und an seinem Unterteil mit der Entgasungskammer (12) und mit der Auslaßleitung (45) für gereinigtes flüssiges Metall in Verbindung steht.

5. Reinigungsvorrichtung nach Anspruch 2, dadurch gekennzeichnet, daß innerhalb der beiden aneinanderliegenden koaxialen ringförmigen Kammern (14, 16) Versteifungs- und Ablenkplatten (55, 56) für das flüssige Metall angeordnet sind, die den Vortauscher auf der gesamten Länge dieser Kammern bilden zur Versteifung der Konstruktion und zur Führung des flüssigen Metalls.

6. Reinigungsvorrichtung nach Anspruch 2, dadurch gekennzeichnet, daß innerhalb der aneinanderliegenden ringförmigen und den Vortauscher bildenden Kammern (14, 16) Versteifungen (55, 56) längs Schraubenlinien, die als Achse die gemeinsame Achse der ringförmigen Kammern haben, längs der gesamten Länge dieser Kammern und in Querrichtung angeordnet sind zur Versteifung der Konstruktion und zur Führung des flüssigen Metalls längs eines schraubenförmigen Verlaufs.

7. Reinigungsvorrichtung nach Anspruch 2, dadurch gekennzeichnet, daß die ringförmige Zufuhr- und Kühlkammer (16) für das zu reinigende Metall, die Kühlkammer (20) und die Reinigungskammer (22) für das flüssige Metall an ihrem Oberteil durch einen Satz von waagerechten Platten (37 und 38) verschlossen sind, die die Zufuhr- und Kühlkammer (16) für das zu reinigende flüssige Metall mit der Reinigungskammer (22) für das flüssige Metall verbinden und die Kühlkammer (22) vom zu reinigenden flüssigen Metall trennen, wobei in diesen Platten (37 und 38) Öffnungen (37a und 38a) vorgesehen und in Höhe dieser Öffnungen (37a und 38a) Durchtrittskanäle (39) angeordnet sind, um in die Kühlkammer (20) Wärmeentnahmevorrichtungen (40) einzuführen, die Teil der äußeren Kühlmittel dieser Kammer sind.

8. Reinigungsvorrichtung nach einem der Ansprüche 1 bis 7, dadurch gekennzeichnet, daß die Kühlmittel (40) für das gereinigte flüssige Metall der Kühlkammer (20) durch Wärmeleiter gebildet sind, die in das diese Kammer füllende flüssige Metall eintauchen und außerhalb der Reinigungsvorrichtung mit einem Wärmetauscher (41) der luftgekühlten Bauart verbunden sind.

9. Reinigungsvorrichtung nach einem der Ansprüche 1 bis 7, dadurch gekennzeichnet, daß die Kühlmittel für das die Kühlkammer füllende gereinigte Fluid durch haarnadelförmige Rohre (75) gebildet sind, die für den Austausch mit flüssigem Natrium gefüllt sind, mit ihrem Unterteil in das die Kühlkammer (20) füllende flüssige Metall eintauchen und mit ihrem Oberteil in die durch Luft kühlende Vorrichtung (76) eindringen.

10. Reinigungsvorrichtung nach einem der Ansprüche 1 bis 9, dadurch gekennzeichnet, daß von den verschiedenen zylindrischen Mänteln der ringförmigen Kammern alle an ihrem Unterteil auf einer einzigen Grundplatte (10) befestigt sind, die mit Öffnungen (10a) für den Durchtritt des zu reinigenden flüssigen Metalls durchbrochen sind, wobei eine mit den Öffnungen (10a) der Grundplatte (10) in Verbindung stehende Zufuhrkammer (30) für flüssiges Metall unter dieser Platte (10) angeordnet ist und mit dem Auslaß der Umwälzpumpe (6) für das flüssige Metall in Verbindung steht.

11. Reinigungsvorrichtung nach einem der Ansprüche 1 bis 9, dadurch gekennzeichnet, daß die die Kühl- und Reinigungskammern (10 ; 22) begrenzenden zylindrischen Mäntel (19, 21, 23) mit einer ersten waagerechten Grundplatte (10d) verbunden sind und daß die zylindrischen Mäntel (15, 17, 11, 13) des Vortauschers und der Entgasungskammer (12) mit wenigstens einer von der ersten Platte (10d) unterschiedlichen waagerechten Grundplatte (10b) verbunden sind.

12. Reinigungsvorrichtung nach Anspruch 11, dadurch gekennzeichnet, daß die Pumpe (6) über der die zylindrischen Mäntel (15, 17, 11, 13) des Vortauschers und der Entgasungskammer (12) tragenden Grundplatte (10b) angeordnet sind, wobei sich die Anordnung der Elemente der Reinigungsvorrichtung über dieser Grundplatte (10b) befindet.

13. Reinigungsvorrichtung nach einem der Ansprüche 1 bis 12, dadurch gekenzeichnet, daß sie von integrierter Bauart und innerhalb eines mit einem Inertgas gefüllten Mantels (1) angeordnet ist.

14. Reinigungsvorrichtung nach Anspruch 2, dadurch gekennzeichnet, daß eine elektromagnetische Regelpumpe (86) zwischen der Entgasungskammer (12) und der Auslaßkammer (14) für das gereinigte flüssige Metall derart angeordnet ist, daß sie das flüssige Metall in diese Kammer (14) bis zu einem Niveau fördert, das über dem Ende des inneren zylindrischen Mantels (13) der Entgasungskammer (12) liegt.

15. Reinigungsvorrichtung nach einem der Ansprüche 1 bis 4, dadurch gekennzeichnet, daß die Pumpe für die Umwälzung des flüssigen Metalls eine Durchsatzmeßpumpe (6-7) ist, die auch eine Messung des Durchsatzes des in die Reinigungsvorrichtung eintretenden flüssigen Metalls gestattet.

0 109 877

Fig 1

Fig 1b

Fig 1a

Fig 1c

Fig 1d

Fig 2

# Fig 3

# Fig 3a

Fig 4a

Fig 4

70b

70a

44

40

A

72a

73a

20

71

72

73

22

12

70

11

45

10a

10

30

79

77

78

80

76

81

Fig 5

75

4

0 109 877

Fig 7

Fig 6a

Fig 6b

5